# EUROPÄISCHE PATENTANMELDUNG

(11) **EP 3 960 029 A1**
(43) Veröffentlichungstag der Anmeldung: **02.03.2022**
(21) Anmeldenummer: 21193673.7
(22) Anmeldetag: 27.08.2021
(51) Int. Cl.: A47B 77/02, B60P 3/36, B60N 3/00, B60N 3/16, A47B 1/05

(54) **KÜCHE FÜR FREIZEITFAHRZEUG**

(30) Priorität: 27.08.2020 DE 102020122490
(71) Anmelder: Niesmann+Bischoff GmbH, 56751 Polch (DE)
(72) Erfinder: BRANDL, Hubert, 56751 Polch (DE)
(74) Vertreter: Waller, Stefan

(57) **Zusammenfassung**

Bei einer Küche für ein Freizeitfahrzeug mit Unterschränken (4), die einen quadratischen oder längs gestreckten Rechteckgrundriss aufweisen sowie mit einer Spüle (9) und/oder Kochfläche (14) sowie mit einer Abdeckplatte (10,15), ist ein Auszug (2,3,8) in den Unterschränken (4) angeordnet, auf dem im ausgezogenen Zustand die Abdeckplatte (10,15) eine zusätzliche Arbeitsfläche bildet.

## Beschreibung

Die Erfindung betrifft eine Küche für ein Freizeitfahrzeug, insbesondere ein Wohnmobil.

Unter einem Freizeitfahrzeug oder Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Es ist möglich, dass die zum Schlafen oder Wohnen vorgesehenen Einrichtungen, insbesondere Möbel, ganz oder teilweise aus dem Fahrzeug auf einfache Art und Weise ausgebaut oder entfernt werden können, um das Fahrzeug auch anderweitig nutzen zu können. Bei einem Wohnmobil ist ein Transporter eines Fahrzeugherstellers mit einer Einrichtung zum Campen versehen. Dabei kann entweder die bestehende Karosserie des Transporters genutzt werden und es handelt sich dann um einen sogenannten "Camper Van", oder es werden nur die Fahrerkabine und das Fahrgestell des Transporters oder ein speziell für diesen Zweck gebautes hinteres Fahrgestell genutzt, auf das ein Wohnaufbau mit größeren Abmessungen und Innenraum als das ursprünglich Transportfahrzeug aufgesetzt wird. Ebenfalls unter die Kategorie Freizeitfahrzeug fällt ein Wohnwagen oder Caravan als Anhänger.

Im Bereich der Freizeitfahrzeuge und insbesondere Wohnmobile sind zwei Standardküchenformen vorherrschend. Die eine häufige Ausführungsformen ist eine Seitenküche. Diese besteht aus zwei oder drei Kochplatten und einem Spülbecken. Der Kühlschrank ist hier oft untergebaut, ebenso wie ein paar kleinere Schränke und/oder Schubladen. Eine solche Seitenküche ist typischerweise, aber nicht zwingend, als langgestrecktes Rechteck in Fahrzeugrichtung an einer der Seitenwände angeordnet. Ein Vorteil der Seitenküche sind die relativ kompakten Maße.

Nachteilig an diesem Stand der Technik ist aber, dass der zur Verfügung stehende Bauraum und die Arbeitsflächen sehr gering ausfallen.

Als Lösung für dieses Problem ist es im Stand der Technik bekannt, dass Holz-, Metall-oder Glasabdeckungen für Spüle und Herd teilweise klappbar oder zum Auflegen vorgesehen werden, um zusätzliche Arbeitsfläche zu schaffen.

Nachteilig an diesen Lösungen ist jedoch, dass diese nicht sehr komfortabel sind.

Im Stand der Technik ist weiterhin eine L-Küche bekannt. Bei dieser sind Standardkomponenten wie Herd, Spüle und Kühlschrank in einem L angeordnet. Bei Wohnmobilen wird die L-Küche häufig auf der Fahrerseite zwischen Sitzgruppe und Bad angeordnet. Die L-Küche weist wesentlich mehr Arbeitsfläche und Stauraum auf gegenüber der Seitenküche.

Nachteilig an diesem Stand der Technik ist jedoch der größere Bauraumbedarf. Weiterhin kann eine solche Küche praktisch nur sinnvoll mit einer L-Sitzbank bzw. einer Sitzbank quer zur Fahrtrichtung kombiniert werden. Sehr beliebte Reisemobilgrundrisse weisen allerdings zwei gegenüberliegende gerade Sitzbänke auf, die in Fahrtrichtung längs angeordnet sind. Diese wird auch als "Face to Face" Anordnung bezeichnet. Für diese Grundrisse sind L-Küchen in der Regel ungeeignet.

Der vorliegenden Erfindung liegt daher die Aufgabe zugrunde, eine Küche für ein Freizeitfahrzeug zur Verfügung zu stellen, das die zuvor genannten Nachteile vermeidet und durch die eine kompakte Seitenküche für einen Reisemobil- bzw. Wohnmobilgrundriss mit gegenüberliegender Anordnung von in Fahrtrichtung längsorientierten Sitzbänken ermöglicht wird.

Diese Aufgabe wird durch eine Küche für ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einer Küche für ein Freizeitfahrzeug mit Unterschränken, die einen quadratischen oder längs gestreckten Rechteckgrundriss aufweisen sowie mit einer Spüle und/oder Kochfläche mit einer Abdeckplatte, ein Auszug in den Unterschränken angeordnet ist, auf dem im ausgezogenen Zustand die Abdeckplatte eine zusätzliche Arbeitsfläche bildet.

Dadurch wird vorteilhaft eine gegenüberliegende oder "Face to Face" Anordnung der Sitzbänke möglich und zugleich aber auch die große Arbeitsfläche einer L-Küche zur Verfügung gestellt.

Die Abdeckplatte, insbesondere für die Kochfläche, kann fest mit dem Auszug verbunden sein.

In einer Ausführungsform kann die Abdeckplatte, insbesondere für die Spüle, lose auf der Spüle und/oder der Kochfläche aufliegen und lose auf den ausgezogenen Auszug aufgelegt werden.

Die Abdeckplatte kann dann beispielsweise zugleich auch als Schneidbrett denen das leicht an andere Position verbracht werden kann.

In vorteilhafter Ausführung ist die Abdeckplatte auf dem Auszug niveaugleich mit einer Arbeitsplatte der Unterschränke angeordnet.

In einer günstigen Weiterbildung haben die Unterschränke einen längs gestreckten Rechteckquerschnitt im Grundriss und kann der Auszug, insbesondere für die Kochfläche, quer zur Längsseite ausgezogen werden.

Vorteilhaft kann somit die Küche als kompakte Seitenküche ausgeführt sein und beansprucht nur einen geringen Bauraum. Die Kochfläche, besipielsweise in Form von Gaskochern ist beispielsweise durch eine Glasplatte als Abdeckplatte des Auszugs abgedeckt, die mittels kugelgelagerter Führungsschienen ausgezogen werden kann. Dadurch wird der Kocher frei gegeben und die Arbeitsfläche zu einem L erweitert. Es ergeben sich die Vorteile der L-Küche.

An dem Auszug, oder im Falle von mehreren, an jedem der Auszüge können jeweils Behälter angebracht werden, die beispielweise Abfälle beim Schneiden aufnehmen

Der Auszug kann aus einer vorderen Querkante, die in eine Front oder Seitenwand der Unterschränke integriert ist sowie zwei seitlichen Auszügen bestehen, insbesondere Führungsschienen, auf denen die Abdeckplatte aufliegt.

Die Abdeckplatte kann aus einem transparenten Material bestehen, insbesondere einer Glasplatte.

In einer günstigen Ausgestaltung kann der ausgezogene Auszug an einem gegenüberliegenden Einrichtungsobjekt, insbesondere einer Möbelwand und/oder der Wand eines Bades oder einer Toilette abgestützt werden.

An dem Einrichtungsobjekt ist vorteilhaft eine Klappe vorgesehen ist, die um 90° herabgeklappt als Abstützlager für den Auszug dient.

Der Auszug kann an dem Einrichtungsobjekt arretiert werden.

Vorteilhaft sind zwei Auszüge vorgesehen, die in ausgezogenen Zustand zueinander einen Winkel von 90° aufweisen, insbesondere einer über dem Kochfeld und der andere über der Spüle.

In einer vorteilhaften Ausgestaltung verfügt die Küche über einen Rahmen der seitlich ausgezogen werden kann. Dieser bildet dann die Auflage für die Abdeckplatte der Spüle, die gleichzeitig z.B. als Schneidbrett dient und die verfügbare Arbeitsfläche weiter vergrößert.

Es ergibt sich vorteilhaft ein geringer Bauraumbedarf einer Seitenküche bei gleichzeitig großer verfügbarer Arbeitsfläche einer L-Küche, eine verbesserte Ergonomie durch die L-Anordnung der Auszüge und der Behälter, die optional angebracht werden können und die Küche ist einsetzbar in Kombination mit der "Face to Face" Sitzbank- bzw. Sofaanordnung.

Es ist auch denkbar ein Gegenlager des Auszugs der Kocherabdeckung als Klappe in einer Stehlampe integriert vorzusehen.

Weitere Vorteile und Einzelheiten der Erfindung werden anhand der in den schematischen Figuren dargestellten Ausführungsbeispiele näher erläutert. Dabei zeigt
- Fig. 1: eine erfindungsgemäße Küche mit zwei ausgezogenen Auszügen,
- Fig. 2: die Küche der Fig. 1 mit eingeschobenen Auszügen,
- Fig. 3: einen ersten Auszug halb ausgezogen mit gegenüberliegender Abstützklappe,
- Fig. 4: den ersten Auszug auf der Abstützklappe,
- Fig. 5: einen zweiten Auszug ausgezogen,
- Fig. 6: die Darstellung der Fig. 5 mit angehobener Abdeckplatte und
- Fig. 7: eine beispielhafte Anordnung der Küche in einem Wohnmobil.

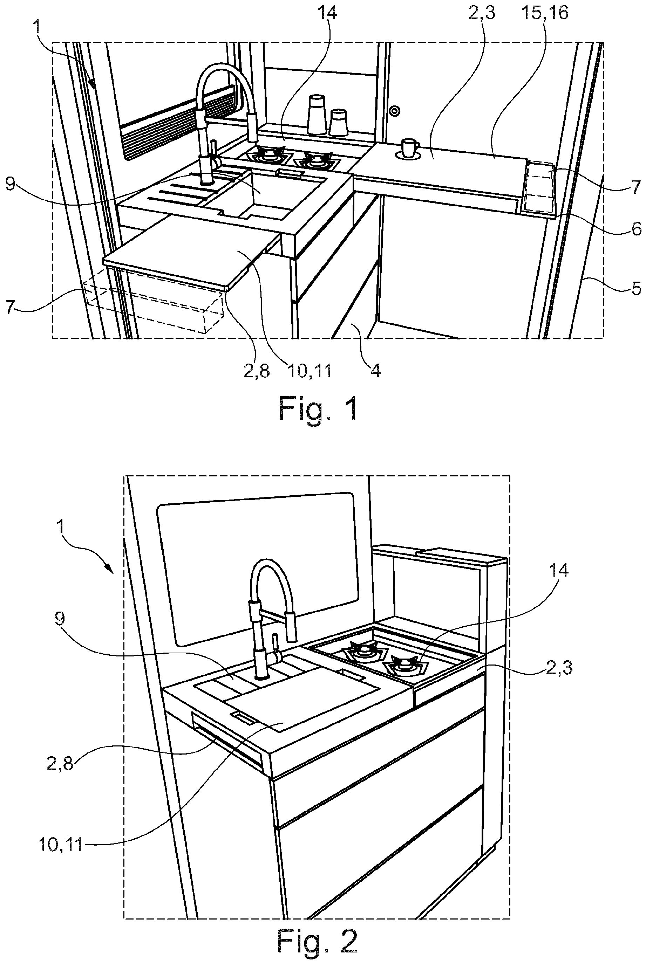

Die Fig. 1 zeigt eine erfindungsgemäße Küche 1 mit zwei ausgezogenen Auszügen 2. Ein erster Auszug 3 erstreckt sich rechtwinklig von den Unterschränken 4, die in ihrem Grundriss ein längsgestrecktes Rechteck bilden, zu einem Einrichtungsobjekt 5, in dem vorliegenden Beispiel ein Schrank oder eine Nasszelle. Der erste Auszug 3 wird dabei von einer Klappe 6 abgestützt, die an dem Einrichtungsobjekt 5 heruntergeklappt werden kann und auf der auch Gegenstände abgestellt werden können oder ein Behälter 7. Eine Abdeckplatte 15 in Form einer Glasplatte 16 liegt auf dem Auszug 3 auf.

Ein zweiter Auszug 8 ist seitlich einer Spüle 9 herausgezogen und weist als Abdeckplatte 10 ein Schneidbrett 11 auf, dass lose aufgelegt werden kann. Ein weiterer Behälter 7 ist an diesem zweiten Auszug 8 eingehängt. Insgesamt ergibt sich mit der Spüle 9 und einem Kochfeld 14 in der Mitte eine Arbeitsfläche in einem Umfang wie bei einer L-Küche.

Die Fig. 2 zeigt die Küche der Fig. 1 mit eingeschobenen Auszügen 2,3,8. Der erste Auszug 3 ist über die Kochfläche 14 geschoben. Die Abdeckplatte 10 in Form des Schneidbretts 11 des zweiten Auszugs 8 ist als Abdeckung über der Spüle 9 angeordnet. In diesem Zustand ist die Küche 1 sehr platzsparend und kompakt. Es wird erheblich weniger Platz benötigt, als wie bei einer L-Küche.

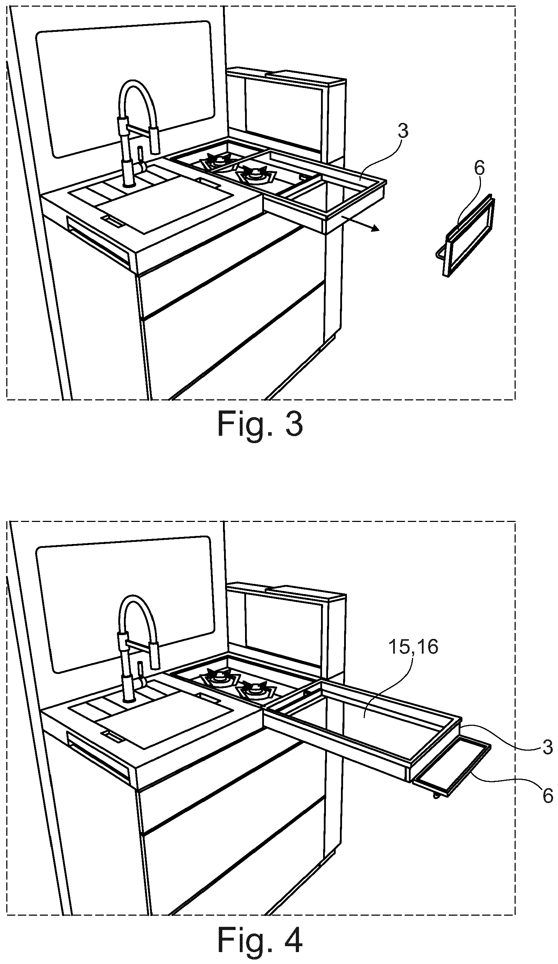

Die Fig. 3 zeigt den ersten Auszug 3 halb ausgezogen mit gegenüberliegender Klappe 6 zur Abstützung.

Die Fig. 4 zeigt den ersten Auszug 3 vollständig ausgezogen und auf der um 90° nach unten gedrehten Klappe 6 abgestützt. Es ist auch möglich, hier eine Arretierung vorzusehen, sodass der Auszug 3 festgehalten wird und beim Arbeiten auf der Abdeckplatte 15 in Form der Glasplatte 16 es nicht zu Bewegungen des Auszugs 3 kommen kann.

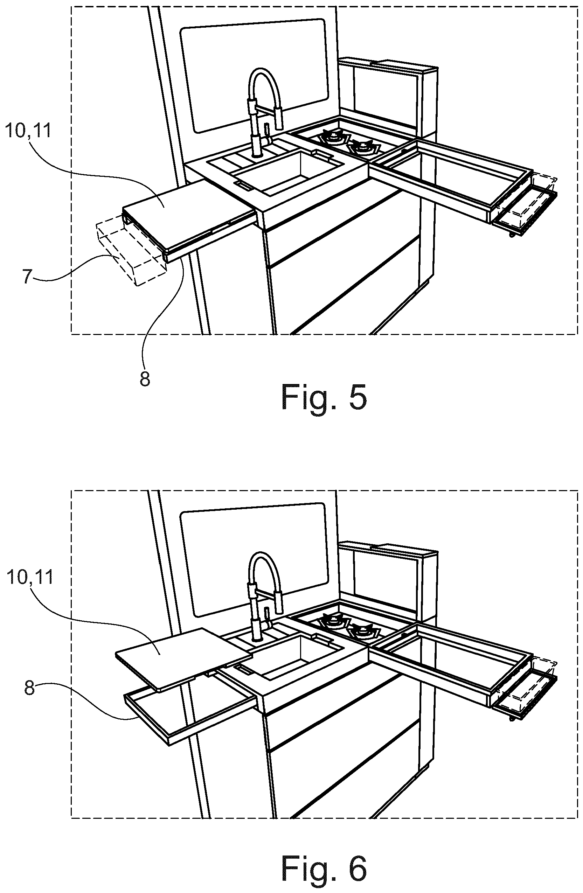

Die Fig. 5 zeigt e die Darstellung der Fig. 4 mit zusätzlich dem zweiten Auszug 8 ausgezogen. Der Behälter 7 ist an dem zweiten Auszug 8 angehängt und die Abdeckplatte 10 in Form des Schneidbretts 11 ist aufgelegt.

Die Fig. 6 zeigt die Darstellung der Fig. 5 mit angehobener Abdeckplatte 10 zur Verdeutlichung, dass der zweite Auszug 8 in dem hier vorliegenden Beispiel ein Rahmen ist, auf den das Schneidbrett 11 als Abdeckplatte 10 aufgelegt werden kann. Es sind natürlich auch feste Abdeckplatten denkbar und die dargestellte Version stellt nur eine beispielhafte Ausführungsform dar.

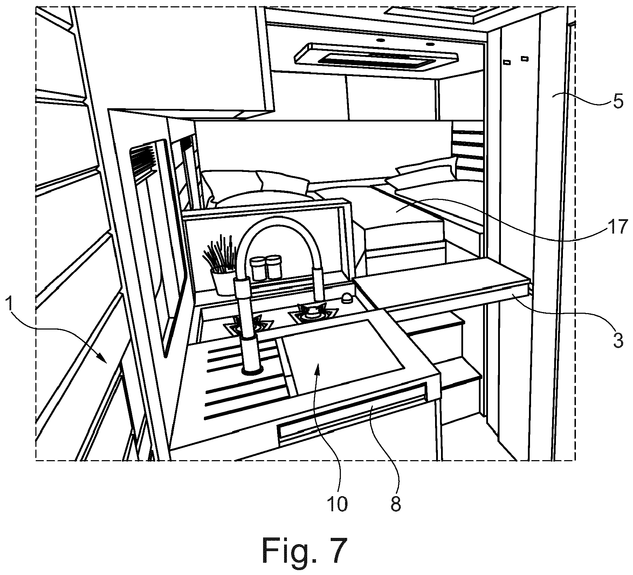

Die Fig. 7 zeigt eine beispielhafte Anordnung der Küche 1 in einem Wohnmobil. Die Küche 1 ist mit dem ausgezogenen ersten Auszug 3 dargestellt, der sich quer bis zu einem Einrichtungsobjekt 5, beispielsweise einer Nasszelle erstreckt. Der 2. Auszug 8 ist eingefahren und seine Abdeckplatte 10 liegt auf der Spüle 9.

In Fahrtrichtung hinter der Küche 1 bzw. dem Einrichtungsobjekt 5 befindet sich ein Schlafbereich 17. In Fahrtrichtung vor der Küche 1 kann aufgrund deren Kompaktheit eine Anordnung "Face to Face" als Sitzbereich mit Längssitzbänken vorgesehen werden.

## Patentansprüche

1. Küche für ein Freizeitfahrzeug mit Unterschränken (4), die einen quadratischen oder längs gestreckten Rechteckgrundriss aufweisen sowie mit einer Spüle (9) und/oder Kochfläche (14) sowie mit einer Abdeckplatte (10,15),
**dadurch gekennzeichnet,**
**dass** ein Auszug (2,3,8) in den Unterschränken (4) angeordnet ist, auf dem im ausgezogenen Zustand die Abdeckplatte (10,15) eine zusätzliche Arbeitsfläche bildet.

2. Küche nach Anspruch 1,
**dadurch gekennzeichnet,**
**dass** die Abdeckplatte (15), insbesondere für die Kochfläche (14), fest mit dem Auszug (3) verbunden ist.

3. Küche nach Anspruch 1,
**dadurch gekennzeichnet,**
**dass** die Abdeckplatte (10), insbesondere für die Spüle (9), lose auf der Spüle (9) und/oder der Kochfläche aufliegt und lose auf den ausgezogenen Auszug (8) aufgelegt werden kann.

4. Küche nach einem der vorhergehenden Ansprüche,
**dadurch gekennzeichnet,**
**dass** die Abdeckplatte (10,15) auf dem Auszug niveaugleich mit einer Arbeitsplatte der Unterschränke (4) ist.

5. Küche nach einem der vorhergehenden Ansprüche,
**dadurch gekennzeichnet,**
**dass** die Unterschränke (4) einen längs gestreckten Rechteckquerschnitt im Grundriss haben und der Auszug (3), insbesondere für die Kochfläche (14), quer zur Längsseite ausgezogen werden kann.

6. Küche nach einem der vorhergehenden Ansprüche,
**dadurch gekennzeichnet,**
**dass** an dem Auszug Behälter (7) im ausgezogenen Zustand angeordnet werden können, insbesondere für Abfälle.

7. Küche nach einem der vorhergehenden Ansprüche,
**dadurch gekennzeichnet,**
**dass** der Auszug (8) aus einer vorderen Querkante, die in eine Front oder Seitenwand der Unterschränke (4) integriert ist sowie zwei seitlichen Auszügen besteht, auf denen die Abdeckplatte (10) aufliegt.

8. Küche nach einem der vorhergehenden Ansprüche,
**dadurch gekennzeichnet,**
**dass** die Abdeckplatte (15) aus einem transparenten Material besteht, insbesondere eine Glasplatte (16) ist

9. Freizeitfahrzeug, insbesondere Wohnmobil, mit einer Küche nach einem der vorhergehenden Ansprüche,
**dadurch gekennzeichnet,**
**dass** der ausgezogene Auszug (3) an einem gegenüberliegenden Einrichtungsobjekt (5), insbesondere einer Möbelwand und/oder der Wand eines Bades oder einer Toilette abgestützt werden kann.

10. Freizeitfahrzeug nach Anspruch 9,
**dadurch gekennzeichnet,**
**dass** an dem Einrichtungsobjekt (5) eine Klappe (6) vorgesehen ist, die um 90° herabgeklappt als Abstützlager für den Auszug (3) dient.

11. Freizeitfahrzeug nach Anspruch 9 oder 10,
**dadurch gekennzeichnet,**
**dass** der Auszug (3) an dem Einrichtungsobjekt arretiert werden kann.

12. Küche nach einem der vorhergehenden Ansprüche,
**dadurch gekennzeichnet,**
**dass** zwei Auszüge (2,3,8) vorgesehen sind, die in ausgezogenen Zustand zueinander einen Winkel von 90° aufweisen, insbesondere einer über dem Kochfeld (14) und der andere über der Spüle (9)
